# FASCICULE DE BREVET EUROPEEN

(11) **EP 0 348 258 B1**
(45) Date de publication et mention de la délivrance du brevet: **11.08.1993**
(21) Numéro de dépôt: 89401512.2
(22) Date de dépôt: 02.06.1989
(51) Int. Cl.: F16B 5/06, F16B 19/00, B60N 3/02

(54) **Système de fixation d'un garnissage et d'un élément tel qu'une poignée sur un panneau de carrosserie**
Verfahren zur Befestigung einer Verkleidung und eines Teils, wie ein Griff, auf einer Karosserieplatte
Method to fix a lining and a part such as a handle to a coachwork panel

(30) Priorité: 21.06.1988 FR 8808272
(43) Date de publication de la demande: 27.12.1989
(73) Titulaire: AUTOMOBILES PEUGEOT, 75116 Paris (FR); AUTOMOBILES CITROEN, 92200 Neuilly-sur-Seine (FR)
(72) Inventeur: Demichel, Guy, F-91406 Orsay Cedex (FR); Bouret, Fabrice, F-08150 Rimogne (FR)
(74) Mandataire: Robert, Jean-François

(56) Documents cités:
- FR-A- 2 068 357
- FR-A- 2 277 263
- FR-A- 2 428 540
- FR-A- 2 438 758
- GB-A- 1 094 697
- US-A- 3 319 918
- US-A- 4 602 760

## Description

L'invention a pour objet un système de fixation d'un ensemble comportant un garnissage et au moins un élément tel qu'une poignée sur un panneau tel qu'un panneau de carrosserie, applicable notamment à la fixation du garnissage de pavillon et des poignées de maintien d'un véhicule automobile.

Généralement, à l'heure actuelle, les poignées de maintien sont mises en place après qu'on a effectué la fixation du garnissage de pavillon et elles sont fixées à la carrosserie par vissage. Pour cela, il faut d'abord mettre en place un logement de vis sur la carrosserie, ce logement pouvant être réalisé en matière plastique ou en métal. Dans le premier cas, il est mis en place par clippage et, dans le deuxième cas, par soudage. On amène ensuite le garnissage en position et on le fixe, par exemple par collage. Puis on amène la poignée, on la met en position et on la fixe à l'aide de vis, l'axe de ces vis étant généralement incliné vers l'intérieur du véhicule. On comprend donc que ces opérations nombreuses et devant être effectuées les unes à la suite des autres allongent la durée de fabrication du véhicule et, par conséquent, en augmentent le coût.

Le document FR-A-2 428 540 décrit un système de fixation d'une poignée à l'aide de coins engagés dans des tasseaux prévus aux extrémités de la poignée, ce qui a pour effet d'écarter des pattes flexibles munies de dents qui viennent s'encliqueter contre la carrosserie

L'invention a pour but de remédier à ces inconvénients en proposant un système de fixation qui permet de mettre en place et de fixer simultanément le garnissage et les poignées de maintien, cette opération pouvant en outre être effectuée à l'aide d'un robot.

Plus précisément, l'invention a pour objet un système de fixation d'un ensemble comprenant un garnissage et au moins un élément tel qu'une poignée sur un panneau tel qu'un panneau de carrosserie d'un véhicule automobile à l'aide de moyens de fixation respectifs pour le garnissage et la poignée, le garnissage étant mis en place par translation suivant une direction donnée et les moyens de fixation de la poignée comprenant:
- une contre-tôle solidaire dudit panneau de carrosserie et présentant un orifice;
- un rivet apte à être fixé sur la poignée et présentant un passage délimité entre des pattes flexibles; et
- un axe rigide pouvant être introduit dans ledit passage pour écarter les pattes flexibles, ces dernières présentant un épaulement s'appuyant sur le bord de l'orifice lorsque ledit ensemble est mis en place sur le panneau et l'axe rigide introduit dans ledit passage,
le système comportant en outre des moyens de montage de la poignée sur le garnissage et ledit passage s'étendant parallèlement à ladite direction de translation lorsque la poignée est montée sur le garnissage.

Ainsi, l'invention permet, après montage préalable de la poignée sur le garnissage, d'amener cet ensemble par un seul et même mouvement dans une position où l'on peut effectuer simultanément la fixation du garnissage et celle de la poignée, ce qui entraîne un gain de temps appréciable. De plus, il n'y a que des mouvements simples (translations), ce qui rend possible l'utilisation d'un robot.

L'axe rigide peut être une tige filetée. Avantageusement dans ce cas, les pattes du rivet peuvent comporter des becquets permettant de retenir la tige filetée. Cette disposition permet d'introduire la vis par translation dans le rivet pour écarter les pattes de ce dernier et d'empêcher une extraction involontaire de la vis. Cependant, il est possible d'extraire celle-ci par dévissage, les becquets servant de guides.

L'invention a également pour objet un système de fixation d'un ensemble comprenant un garnissage et au moins un élément tel qu'une poignée sur un panneau tel qu'un panneau de carrosserie de véhicule automobile à l'aide de moyens de fixation respectifs pour le garnissage et la poignée, le garnissage étant mis en place sur le panneau par translation suivant une direction donnée et les moyens de fixation de la poignée comprenant:
- une contre-tôle présentant un orifice;
- une patte flexible en bordure d'un passage; et
- un axe rigide pouvant être introduit dans ce passage pour écarter ladite patte flexible, cette dernière s'appuyant sur le bord de l'orifice lorsque ledit ensemble est mis en place sur le panneau et l'axe rigide introduit dans ledit passage;
ladite patte flexible faisant partie de la poignée et le passage étant ménagé dans celle-ci, la patte flexible présentant un bossage apte à pénétrer dans un lamage de la poignée après être passé à travers ladite ouverture lorsque ledit ensemble est mis en place sur le panneau et l'axe rigide introduit dans ledit passage, le système comportant en outre des moyens de montage de la poignée sur le garnissage et ledit passage s'étendant parallèlement à ladite direction de translation lorsque la poignée est montée sur le garnissage.

La configuration de la patte flexible dans cette réalisation permet de limiter le nombre de pièces nécessaires puisqu'il n'y a pas de rivet à fixer sur la poignée.

Dans le cas où il s'agit du garnissage de pavillon et des poignées de maintien d'un véhicule automobile, ledit mouvement peut s'effectuer suivant une direction verticale, généralement de bas en haut.

Suivant une autre caractéristique intéressante de l'invention, l'axe rigide peut être extrait dudit passage, ce qui a pour effet de libérer l'élément souple et de rendre la poignée démontable.

Avantageusement, les moyens de montage de la poignée sur le garnissage comprennent des moyens de clippage, ce qui rend plus facile et plus rapide l'opération préalable de montage de la poignée sur le garnissage.

Quant à l'axe rigide, il peut soit être réalisé séparément du rivet ou de la poignée, soit être venu de moulage avec ces pièces. Dans ce dernier cas, le moule est conçu pour qu'au démoulage, l'axe soit relié au rivet ou à la poignée par un film plastique mince et se trouve dans une position où il est légèrement engagé dans ledit passage. Le film plastique est détruit au moment où l'on exerce un effort pour introduire l'axe dans le passage. Ceci permet de diminuer encore le coût de fabrication en évitant d'avoir à fabriquer à part les axes rigides.

L'invention apparaîtra mieux à la lecture de la description qui va suivre, donnée à titre d'exemple non limitatif, en référence aux dessins annexés dans lesquels:
- la Figure 1 est une vue schématique partielle en coupe verticale montrant un garnissage et une poignée de maintien fixés sur un panneau de carrosserie d'un véhicule selon le premier mode de réalisation;
- la Figure 2 est une vue schématique en coupe verticale à échelle agrandie des éléments de la figure 1 avant fixation;
- la Figure 3 est une vue schématique semblable à la figure 2 montrant les mêmes éléments après fixation; et
- les Figures 4, 5 et 6 sont des vues schématiques correspondant aux figures 1, 2 et 3 respectivement, mais pour le deuxième mode de réalisation.

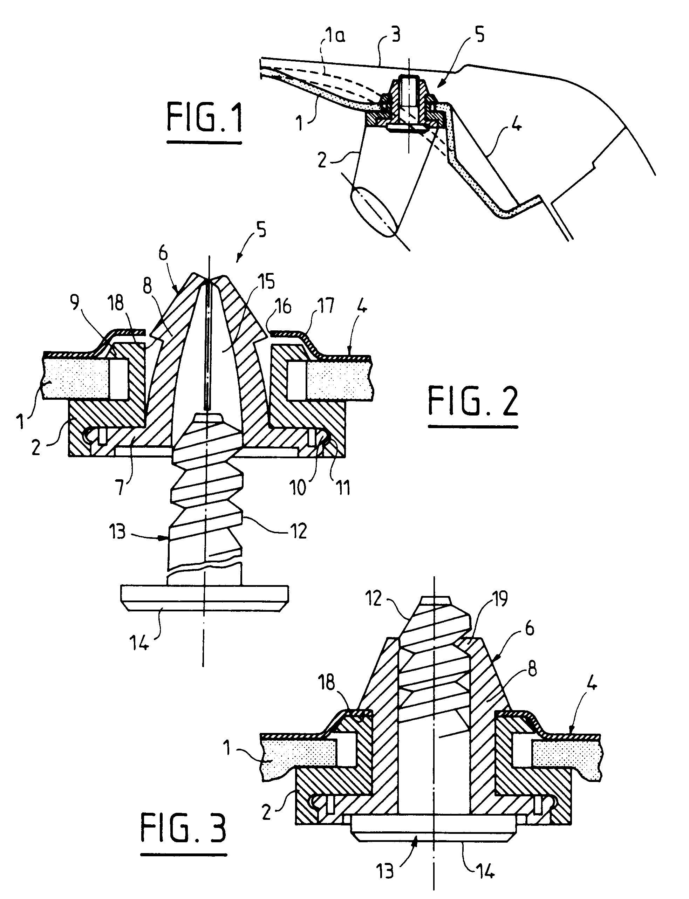

Si l'on se reporte à la Figure 1, on voit un garnissage 1 et une poignée 2, par exemple un garnissage de pavillon et une poignée de maintien d'un véhicule automobile. Le garnissage est fixé à une tole 3, constituant le pavillon du véhicule, par des moyens connus, par exemple par collage. Quant à la poignée 2, elle est montée sur le garnissage et fixée sur une contre-tôle 4, solidaire de la tôle 3, par des moyens de fixation portant la référence générale 5 et qui vont être décrits ci-après en référence aux figures 2 et 3.

Il est à noter que, sur la Figure 1, la poignée et le garnissage sont représentés tronqués; de plus, on a représenté en traits interrompus la section courante du garnissage (référence la) et en traits pleins sa section au niveau de la poignée. Il est à noter également qu'il peut y avoir plusieurs ensembles tels que 5, par exemple deux, par poignée.

Les moyens de fixation précités se composent essentiellement d'un rivet souple 6 qui comporte une embase 7 et des pattes flexibles 8 ayant une première extrémité fixée à l'embase 7 ou faisant corps avec celle-ci et une deuxième extrémité libre.

La mise en place et la fixation du garnissage et de la poignée se déroulent de la manière suivante:

Le garnissage, la poignée et le rivet étant réalisés à part, on commence par fixer la poignée sur le garnissage et le rivet sur la poignée. Ces opérations se déroulent en dehors de la ligne de montage du véhicule et sont réalisées de préférence par clippage. Pour cela, on a prévu sur la poignée un rebord 9 permettant de la fixer sur le garnissage par pincement. Quant au rivet, on a prévu sur le pourtour de son embase 7 un bossage 10 apte à pénétrer à force dans une gorge 11 de la poignée.

Toujours en dehors de la ligne de montage, on met en place l'axe rigide. Dans l'exemple décrit ici, ce dernier se présente sous la forme d'une tige filetée 12 qui constitue le corps d'une vis 13 dont la tête porte la référence 14. A ce stade du montage, la vis se trouve dans la position illustrée à la Figure 2, c'est-à-dire que l'extrémité du corps 12 opposée à la tête 14 est légèrement engagée dans le passage constitué par l'espace 15 entre les pattes 8, à partir de l'embase 7 du rivet.

Le maintien de la vis 13 sur le rivet 6 peut se faire soit par introduction à force de la tige filetée 12 dans le passage 15, soit à l'aide d'un film plastique mince si la vis 13 est venue de moulage avec le rivet 6.

A l'aide d'un robot, on amène l'ensemble constitué par le garnissage, la poignée et le rivet à l'intérieur de la caisse du véhicule et, par un mouvement vertical de bas en haut, on amène cet ensemble au contact de la face intérieure du pavillon, pratiquement dans sa position définitive. Il est à noter que, dans cette position, l'extrémité des pattes 8 opposée à l'embase 7 se trouve au-delà de la contre-tôle 4 après être passée à travers un orifice 16 ménagé dans un bossage 17 de celle-ci.

Le mouvement continue jusqu'à ce que les rebords 9 de la poignée soient en contact avec la face inférieure de la contre-tôle 4 au niveau du bossage 17 et que les épaulements 18 des pattes 8 soient passés au-delà de cette contre-tôle. On enfonce alors la vis 13 dans le passage 15 du rivet, par un mouvement vertical de bas en haut qui peut également être effectué à l'aide du robot. Ceci a pour effet d'écarter les pattes du rivet qui viennent en appui sur la face supérieure de la contre-tôle 4 par l'intermédiaire de leurs épaulements 18 (Figure 3).

Il est à noter que les pattes 8 du rivet 6 présentent, à leur extrémité libre et du côté intérieur, des becquets 19 aptes à pénétrer dans la gorge du filetage de l'axe 12. Ceci a pour effet de maintenir la vis 13 en position et d'empêcher son extraction par translation. Il reste cependant possible de l'extraire par dévissage, ce qui permet de démonter la poignée, pour réparation ou remplacement par exemple.

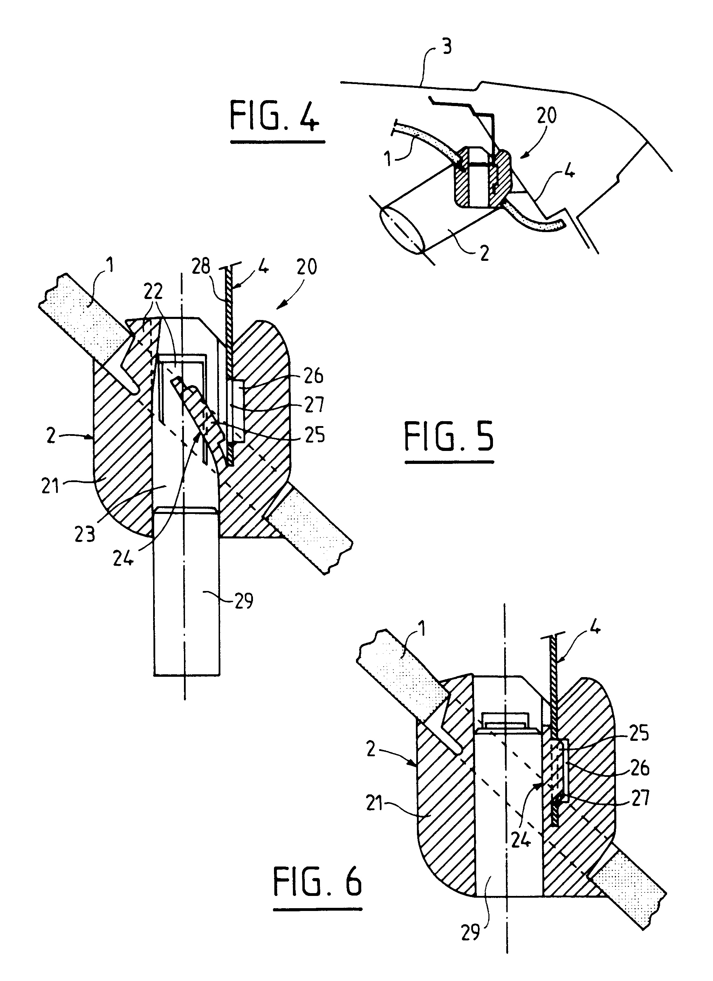

On va maintenant décrire le deuxième mode de réalisation en référence aux figures 4 à 6. Pour plus de clarté, les éléments semblables à ceux des figures 1 à 3 portent les mêmes numéros de référence.

Sur la figure 4, on retrouve le garnissage 1 et la poignée 2 fixés à la tole 3 constituant le pavillon du véhicule. Le garnissage 1 peut être fixé par collage et la poignée 2 est fixée à la contre-tôle 4 par des moyens de fixation 20 qui vont être décrits de manière détaillée ci-dessous en référence aux figures 5 et 6. Comme sur la figure 1, la poignée et le garnissage ont été représentés partiellement et il peut y avoir plusieurs ensembles tels que 20 par poignée.

Si l'on se reporte à la figure 5, on voit que les moyens de fixation 20 comprennent d'abord une partie 21 de la poignée 2 conformée de manière à pouvoir être fixée sur le garnissage 1, de préférence par clippage: pour cela on a prévu des pattes souples telles que 22.

La partie 21 de la poignée 2 présente en outre un passage central vertical 23 ouvert à ses deux extrémités. Sa section est carrée ou rectangulaire et, sur l'une de ses faces, se trouve une patte flexible 24 reliée à la partie 21 de la poignée 2 par une zone mince prévue à sa partie inférieure. La patte 24 présente en outre un bossage 25 apte à pénétrer dans un lamage 26 de la poignée après être passé à travers une ouverture 27 ménagée dans une partie verticale 28 de la contre-tôle 4.

La mise en place de la poignée et du garnissage suivant le deuxième mode de réalisation se fait de la manière suivante:

En dehors de la ligne de montage du véhicule, on fixe d'abord la poignée 2 sur le garnissage 1 par clippage à l'aide des pattes 22 prévues sur sa partie 21. On introduit ensuite l'axe 29 dans le passage 23 par le bas: la position est celle représentée à la figure 5, seule une petite partie de l'axe étant engagée dans le passage. Comme précédemment, l'axe 29 peut également être venu de moulage avec la poignée 2 et être rattaché à celle-ci par un film mince. De toute façon, sa section correspond à celle du passage 23.

A l'aide d'un robot, on amène l'ensemble constitué par le garnissage 1, la poignée 2, et l'axe 29 à l'intérieur de la caisse du véhicule et, par une translation verticale de bas en haut, en position contre la face intérieure du pavillon. On arrive ainsi à la position illustrée à la figure 5, la partie 28 de la contre-tôle 4 se trouvant entre la patte 24 et la partie de la poignée comportant le lamage 26. Cette partie de la poignée est en contact avec la contre-tôle 4 et le lamage 26 est en face de l'ouverture 27 de cette dernière.

Toujours à l'aide du robot, on pousse l'axe 29 de bas en haut pour l'enfoncer dans le passage 23. Au cours de ce mouvement, il vient en contact avec la patte 24 et la pousse dans le lamage 26 à travers l'ouverture 27 (Figure 6).

On obtient alors une fixation par cisaillement par coopération entre le bossage 25 de la patte 24 et la contre-tôle 4 au niveau de l'ouverture 27 car les dimensions du lamage 26 et de l'ouverture 27 sont pratiquement les mêmes que celles du bossage 25. On peut encore remarquer qu'au cours de ce mouvement, l'axe 29 a repoussé vers l'extérieur les pattes 22, assurant le clippage définitif de la poignée 2 sur le garnissage 1.

L'axe 29 étant entièrement poussé à l'intérieur du passage 23, il est impossible de l'extraire par le bas. Pour le démontage, on le pousse vers le haut jusqu'à ce que la patte 24 soit libérée.

Ainsi, le système de fixation objet de l'invention présente des avantages particulièrement intéressants puisqu'on peut, par un seul mouvement, amener le garnissage et les poignées préalablement assemblés à leur position définitive. On peut alors procéder à la fixation de la poignée par un mouvement suivant la même direction, ce qui facilite la robotisation du processus. De plus, on élimine les opérations de vissage qui nécessitent beaucoup de temps. Enfin, la mise en place de l'axe rigide peut se faire pendant la polymérisation de la colle utilisée pour fixer le garnissage: la durée totale de l'opération est égale à la durée de mise en place et de fixation du garnissage alors qu'avec les méthodes de l'art antérieur, le temps de mise en place et de fixation des poignées s'ajoutait à celui de mise en place et de fixation du garnissage.

Quant aux applications, elles sont nombreuses et variées et ne se limitent pas à la fixation du garnissage de pavillon et des poignées de maintien d'un véhicule automobile. Un tel système peut également être utilisé pour fixer des garnitures et des poignées de porte de véhicules, ou dans d'autres domaines que l'automobile, comme l'ébénisterie par exemple. Il s'applique d'une manière générale à tout domaine où il est nécessaire de fixer un ensemble comprenant une garniture ou un revêtement et un élément rigide sur un panneau.

## Revendications

1. Système de fixation d'un ensemble comprenant un garnissage (1) et au moins un élément tel qu'une poignée (2) sur un panneau (3) tel qu'un panneau de carrosserie d'un véhicule automobile à l'aide de moyens de fixation respectifs pour le garnissage (1) et la poignée (2), le garnissage étant mis en place sur le panneau (3) par translation suivant une direction donnée et les moyens de fixation de la poignée (2) comprenant:
- une contre-tôle (4) solidaire dudit panneau de carosserie et présentant un orifice (16);
- un rivet (6) apte à être fixé sur la poignée (2) et présentant un passage (15) délimité entre des pattes flexibles (8); et
- un axe rigide (12) pouvant être introduit dans ledit passage (15) pour écarter les pattes flexibles (8), ces dernières présentant un épaulement (18) s'appuyant sur le bord de l'orifice (16) lorsque ledit ensemble est mis en place sur le panneau et l'axe rigide (12) introduit dans ledit passage (15),
le système comportant en outre des moyens de montage de la poignée (2) sur le garnissage (1) et ledit passage (15) s'étendant parallèlement à ladite direction de translation lorsque la poignée (2) est montée sur le garnissage (1).

2. Système de fixation selon la revendication 1, caractérisé en ce que l'axe rigide est une tige filetée (12).

3. Système de fixation selon la revendication 2, caractérisé en ce que les pattes (8) du rivet (6) comportent des becquets (19) permettant de retenir la tige filetée (12).

4. Système de fixation d'un ensemble comprenant un garnissage (1) et au moins un élément tel qu'une poignée (2) sur un panneau (3) tel qu'un panneau de carosserie de véhicule automobile à l'aide de moyens de fixation respectifs pour le garnissage (1) et la poignée (2), le garnissage étant mis en place sur le panneau par translation suivant une direction donnée et les moyens de fixation de la poignée (2) comprenant:
- une contre-tôle (4) présentant un orifice (27);
- une patte flexible (24) en bordure d'un passage (23); et
- un axe rigide (29) pouvant être introduit dans ce passage (23) pour écarter ladite patte flexible (24), cette dernière s'appuyant sur le bord de l'orifice (27) lorsque ledit ensemble est mis en place sur le panneau et l'axe rigide (29) introduit dans ledit passage (23);
ladite patte flexible (24) faisant partie de la poignée (2) et le passage (23) étant ménagé dans celle-ci, la patte flexible (24) présentant un bossage (25) apte à pénétrer dans un lamage (26) de la poignée (2) après être passé à travers ladite ouverture (27) lorsque ledit ensemble est mis en place sur le panneau et l'axe rigide (29) introduit dans ledit passage (27), le système comportant en outre des moyens de montage de la poignée (2) sur le garnissage (1) et ledit passage (23) s'étendant parallèlement à ladite direction de translation lorsque la poignée (2) est montée sur le garnissage (1).

5. Système de fixation selon l'une quelconque des revendications 1 à 4, caractérisé en ce que, le garnissage (1) étant un garnissage de pavillon d'un véhicule automobile et la poignée (2) une poignée de maintien, ledit mouvement de translation s'effectue suivant une direction verticale.

6. Système de fixation selon l'une quelconque des revendications 1 à 5, caractérisé en ce que l'axe rigide (12, 29) peut être extrait dudit passage (15, 23), rendant ainsi la poignée (2) démontable.

7. Système de fixation selon l'une quelconque des revendications 1 à 6, caractérisé en ce que les moyens de montage de la poignée (2) sur le garnissage (1) comprennent des moyens de clippage (9, 22).

8. Système de fixation selon l'une quelconque des revendications 1 à 7, caractérisé en ce que l'axe rigide (12, 29) est réalisé séparément du rivet (6) ou de la patte flexible (24).

9. Système de fixation selon l'une quelconque des revendications 1 à 8, caractérisé en ce que l'axe rigide (12, 29) est venu de moulage avec le rivet (6) ou la patte flexible (24) et est rattaché au rivet (6) ou à la patte (24) par un film mince apte à se briser lors de l'introduction de l'axe (12,29) dans ledit passage (15,23).

## Claims

1. A system for fastening an assembly comprising a lining (1) and at least one component such as a handle (2) to a panel (3) such as a bodywork panel of a motor vehicle with the aid of respective fastening means for the lining (1) and the handle (2), the lining being positioned on the panel (3) by translation in a given direction and the means for fastening the handle (2) comprising:
- a counter-sheet (4) integral with said bodywork panel and having an orifice (16);
- a rivet (6) suitable for being fastened to the handle (2) and having a passage (15) delimited between flexible tabs (8); and
- a rigid pin (12) which can be inserted into said passage (15) in order to spread apart the flexible tabs (8), the latter having a shoulder (18) resting against the edge of the orifice (16) when said assembly is positioned on the panel and the rigid pin (12) inserted into said passage (15),
the system further comprising means for fitting the handle (2) to the lining (1) and said passage (15) extending parallel to said direction of translation when the handle (2) is fitted to the lining (1).

2. A fastening system according to Claim 1, characterised in that the rigid pin is a threaded rod (12).

3. A fastening system according to Claim 2, characterised in that the tabs (8) of the rivet (6) comprise nebs (19) by which the threaded rod (12) may be held in place.

4. A system for fastening an assembly comprising a lining (1) and at least one component such as a handle (2) to a panel (3) such as a bodywork panel of a motor vehicle with the aid of respective fastening means for the lining (1) and the handle (2), the lining being positioned on the panel by translation in a given direction and the means for fastening the handle (2) comprising:
- a counter-sheet (4) having an orifice (27);
- a flexible tab (24) on the edge of a passage (23); and
- a rigid pin (29) which can be inserted into this passage (23) in order to spread apart said flexible tab (24), the latter resting against the edge of the orifice (27) when said assembly is positioned on the panel and the rigid pin (29) inserted into said passage (23),
said flexible tab (24) forming part of the handle (2) and the passage (23) being provided inside the latter, the flexible tab (24) having a boss (25) suitable for penetrating into a spot facing (26) in the handle after having passed through said opening (27) when said assembly is positioned on the panel and the rigid pin (29) inserted into said passage (27), the system further comprising means for fitting the handle (2) to the lining (1) and said passage (23) extending parallel to said direction of translation when the handle (2) is fitted to the lining (1).

5. A fastening system according to any one of Claims 1 to 4, characterised in that, the lining (1) being the lining of the roof of a motor vehicle and the handle (2) a grab handle, said translation movement takes place in a vertical direction.

6. A fastening system according to any one of Claims 1 to 5, characterised in that the rigid pin (12, 29) can be extracted from said passage (15, 23), thus making the handle (2) detachable.

7. A fastening system according to any one of Claims 1 to 6, characterised in that the means for fitting the handle (2) to the lining (1) comprise clipping means (9, 22).

8. A fastening system according to any one of Claims 1 to 7, characterised in that the rigid pin (12, 29) is produced separately from the rivet (6) or the flexible tab (24).

9. A fastening system according to any one of Claims 1 to 8, characterised in that the rigid pin (12, 29) is moulded together with the rivet (6) or the flexible tab (24) and is attached to the rivet (6) or the tab (24) by a thin film capable of breaking when the pin (12, 29) is inserted into said passage (15, 23).

## Patentansprüche

1. Verfahren zur Befestigung einer Anordnung, die aus einer Verkleidung (1) und wenigstens einem Teil wie einem Griff (2) besteht, an einem Blech (3) wie einem Karosserieblech eines Kraftfahrzeugs mit Hilfe von Befestigungsmitteln für die Verkleidung (1) und den Griff (2), wobei die Verkleidung durch Verschieben in einer bestimmten Richtung an dem Blech (3) angebracht wird, und die Befestigungsmittel des Griffs (2) aus
- einem Gegenblech (4), das mit genanntem Karosserieblech fest verbunden ist und eine Öffnung (16) aufweist;
- einem Niet (6), der an dem Griff (2) befestigt werden kann und zwischen elastischen Zungen (8) einen begrenzten Durchlaß (15) aufweist; und
- einem steifen Bolzen (12), der in den genannten Durchlaß (15) eingeführt werden kann, um die elastischen Zungen (8) auseinanderzuspreizen, wobei diese letzteren einen Vorsprung (18) aufweisen, der auf dem Rand der Öffnung (16) aufliegt, wenn die genannte Anordnung an dem Blech in Stellung gebracht wird und der steife Bolzen (12) in den genannten Durchlaß (15) eingeführt ist,
besteht, wobei das Verfahren weiterhin Mittel zur Montage des Griffs (2) an der Verkleidung (1) beinhaltet und der genannte Durchlaß (15) parallel zu der genannten Vorschubrichtung verläuft, wenn der Griff (2) an der Verkleidung (1) montiert ist.

2. Verfahren zur Befestigung nach Anspruch 1,
dadurch gekennzeichnet, daß der steife Bolzen von einem Gewindestift (12) gebildet wird.

3. Verfahren zur Befestigung nach Anspruch 2,
dadurch gekennzeichnet, daß die Zungen (8) des Niets (6) Vorsprünge (19) aufweisen, durch die der Gewindestift (12) festgehalten werden kann.

4. Verfahren zur Befestigung einer Anordnung, die aus einer Verkleidung (1) und wenigstens einem Teil wie einem Griff (2) besteht, an einem Blech (3) wie einem Karosserieblech eines Kraftfahrzeugs mit Hilfe von Befestigungsmitteln für die Verkleidung (1) und den Griff (2), wobei die Verkleidung durch Verschieben in einer bestimmten Richtung an dem Blech angebracht wird, und die Befestigungsmittel des Griffs (2) aus
- einem Gegenblech (4), das eine Öffnung (27) aufweist;
- einer elastischen Zunge (24) am Rand eines Durchlaßes (23); und
- einem steifen Bolzen (29), der in diesen Durchlaß (23) eingeführt werden kann, um die elastische Zunge (24) abzuspreizen, wobei diese letztere auf dem Rand der Öffnung (27) aufliegt, wenn die genannte Anordnung an dem Blech in Stellung gebracht wird und der steife Bolzen (29) in den genannten Durchlaß (23) eingeführt ist,
besteht, wobei die genannte elastische Zunge (24) zu dem Griff (2) gehört und der Durchlaß (23) in diesem ausgeführt ist, und wobei die elastische Zunge (24) einen Vorsprung (25) aufweist, der geeignet ist, in eine Vertiefung (26) des Griffs (2) einzudringen, nachdem er durch die genannte Öffnung (27) durchgesteckt wurde, wenn die genannte Anordnung an dem Blech in Stellung gebracht ist und der steife Bolzen (29) in den genannten Durchlaß (27) eingeführt ist, wobei das Verfahren des weiteren Mittel zur Montage des Griffs (2) an der Verkleidung (1) beinhaltet und der genannte Durchlaß (23) parallel zu der genannten Vorschubrichtung verläuft, wenn der Griff (2) an der Verkleidung (1) montiert ist.

5. Verfahren zur Befestigung nach einem der Ansprüche 1 bis 4,
dadurch gekennzeichnet, daß, da die Verkleidung 81) eine Dachverkleidung eines Kraftfahrzeugs ist und der Griff (2) ein Haltegriff, die genannte Vorschubbewegung in einer senkrechten Richtung erfolgt.

6. Verfahren zur Befestigung nach einem der Ansprüche 1 bis 5,
dadurch gekennzeichnet, daß der steife Bolzen (12, 29) aus dem genannten Durchlaß (15, 23) herausgeholt werden kann, wodurch der Griff (2) abmontierbar wird.

7. Verfahren zur Befestigung nach einem der Ansprüche 1 bis 6,
dadurch gekennzeichnet, daß die Mittel zur Montage des Griffs (2) an der Verkleidung (1) aus Einschnappmitteln (9, 22) bestehen.

8. Verfahren zur Befestigung nach einem der Ansprüche 1 bis 7,
dadurch gekennzeichnet, daß der steife Bolzen (12, 29) aus getrennt von dem Niet (6) oder der biegsamen Zunge (24) ausgeführt ist.

9. Verfahren zur Befestigung nach einem der Ansprüche 1 bis 8,
dadurch gekennzeichnet, daß der steife Bolzen (12, 29) zusammen mit dem Niet (6) oder der biegsamen Zunge (24) geformt ist und mit dem Niet (6) oder der Zunge (24) durch eine dünne Schicht verbunden ist, die geeignet ist, bei Einführen des Bolzens (12, 29) in den genannten Durchlaß (15, 23) zu brechen.
